**Europäisches Patentamt**

**European Patent Office**

**Office européen des brevets**

(11) Veröffentlichungsnummer: **0 207 339**
**B1**

(12) # EUROPÄISCHE PATENTSCHRIFT

(45) Veröffentlichungstag der Patentschrift:
**10.05.89**

(51) Int. Cl.⁴: **F16L 47/04**

(21) Anmeldenummer: **86108029.9**

(22) Anmeldetag: **12.06.86**

(54) Verbindungsanordnung mit einer Schraubmuffe.

(30) Priorität: **29.06.85 DE 3523388**

(43) Veröffentlichungstag der Anmeldung:
**07.01.87 Patentblatt 87/2**

(45) Bekanntmachung des Hinweises auf die Patenterteilung:
**10.05.89 Patentblatt 89/19**

(84) Benannte Vertragsstaaten:
**AT BE CH DE FR GB LI NL**

(56) Entgegenhaltungen:
**DE-A- 2 240 548**
**DE-A- 3 315 030**
**DE-A- 3 323 379**
**FR-A- 2 538 075**

(73) Patentinhaber: **Friedrichsfeld GmbH Keramik- und Kunststoffwerke, Steinzeugstrasse 50, D-6800 Mannheim 71(DE)**

(72) Erfinder: **Hildner, Knut, Bärsbacher Weg 1, D-6905 Schriesheim(DE)**

(74) Vertreter: **Klose, Hans, Dipl.-Phys., Kurfürstenstrasse 32, D-6700 Ludwigshafen(DE)**

**Beschreibung**

Die Erfindung betrifft eine Verbindungsanordnung gemäß den im Oberbegriff des Patentanspruchs 1 angegebenen Merkmalen.

Aus der DE-A 3 315 030 ist eine Schraubmuffe aus Kunststoff zum Anschluß eines Metallrohres oder Metallfittings mit einem Rohrgewinde bekannt. Um das Metallrohr dicht und gleichwohl lösbar mit der Schraubmuffe zu verbinden, weist diese eine metallische Einspritzmutter auf, die in ihrem vorderen Bereich über eine vorgegebene Länge ein Innengewinde aufweist. An das Innengewinde schließt sich ein Mantel an, dessen Innendurchmesser größer als der Außendurchmesser des Innengewindes ist und welcher Mantel innen mit einem Kunststoffring der Schraubmuffe ausgefüllt ist. Beim Einschrauben des Metallrohres oder Metallfittings schneidet dessen Rohrgewinde in den genannten Kunststoffring ein oder wird in diesen eingepreßt. Für hohe Sicherheitsanforderungen, insbesondere bei Gasleitungen, oder auch für höhere Drücke kann mit der vorbekannten Verbindungsanordnung die Abdichtung nicht ausreichend sein. So können sich insbesondere im Hinblick auf die geforderte lange Lebensdauer von vielen Jahren oder Jahrzehnten Schwierigkeiten hinsichtlich der Funktionssicherheit ergeben.

Ferner ist aus der DE-C 1 223 208 eine Rohrverbindung für Kunststoffrohre bekannt, bei der beide Rohrenden ein Außengewinde aufweisen und mit einem Gewindestück miteinander gekuppelt sind.

Das Gewindestück enthält an einem Ende wenigstens eine sich parallel zur Achse erstreckende Nase mit einer Anschlagfläche. Das eine Rohrende weist eine der Anschlagfläche zugeordnete radiale Nase auf. Es wird damit sichergestellt, daß das Gewindestück nicht zu weit, aber auch nicht zu wenig auf das eine Rohrende aufgeschraubt wird. Der Übergang von einem Metallrohr auf ein Kunststoffrohr ist damit nicht ohne weiteres durchführbar. An die Dichtheit können keine allzu hohen Anforderungen gestellt werden können.

Aus der FR-A 2 452 657 ist eine Anordnung bekannt, bei welcher ein Kunststoffrohr mit einer Mutter aus Metall verbunden wird. In das Ende des Kunststoffrohres wird ein Verbindungsstück eingeführt, das in einer Hinterschneidung im Inneren der genannten Mutter verankert ist. Das Verbindungsstück weist auf seiner Außenfläche Verzahnungen und Rillen auf. Das Rohrende und das Verbindungsstück sind von einem Spritzteil umgeben, welches nach dem Einführen des Zwischenstückes in das Rohrende um diese beiden herumgespritzt worden ist. Zum Herstellen dieses Spritzstückes bzw. zum Umspritzen des Kunststoffrohrendes sind geeignete Werkzeuge und Maschinen erforderlich. Die Abdichtung des Verbindungsstückes bezüglich der Gewindemutter erfolgt durch Aufschrauben der Gewindemutter auf einen Gewindestutzen oder ähnliches, wozu noch weitere Dichtungselemente notwendig werden.

Aus der GB-A 2 133 850 ist eine Verbindungsanordnung bekannt, bei welcher ein erster Teil in das Kunststoffrohr einzuschieben ist. Der genannte Teil weist an seiner Außenfläche eine radiale Rippe auf, und das Kunststoffrohr wird mittels einer das Rohr außen umgebenden Gewindemutter auf diese Rippe aufgepreßt. Die genannte Rippe weist an ihrer Außenfläche kleine Rippen oder Zähne auf, welche in die Innenfläche des Kunststoffrohres eingepreßt werden. Die Abdichtung erfolgt nur im Bereich der genannten Rippe, und eine zusätzliche Sicherung und Abdichtung ist nicht vorhanden.

Die Erfindung liegt daher die Aufgabe zugrunde, eine Verbindunganordnung mit einer Schraubmuffe und einem Rohrteil der eingangs genannten Art mit geringem konstruktiven Aufwand dahingehend weiterzubilden, daß eine verbesserte Dichtwirkung erzielt wird. Es soll eine einfache Montage und Handhabung beim Herstellen der Verbindung erreicht werden. Die Verbindungsanordnung soll eine wesentlich verbesserte Dichtwirkung gewährleisten und ferner für hohe Druckbereiche einsetzbar sein. Die zur Fertigung der oben genannten Schraubmuffe gemäß der DE-A 3 315 030 vorhandenen Werkzeuge und ferner auch die hieraus bekannte Einspritzmutter sollen ohne wesentliche Änderungen beibehalten werden können. Im Hinblick auf Sicherheitsanforderungen beim Verlegen von Gasleitungen soll vorzugsweise ein nachträgliches Lösen der Verbindungsanordnung nicht mehr erfolgen können. Die Verbindungsanordnung soll eine hohe Beständigkeit gegen Korrosion und insgesamt eine hohe Funktionssicherheit aufweisen.

Die Lösung dieser Aufgabe erfolgt gemäß den im Kennzeichen des Patentanspruchs 1 angegebenen Merkmalen.

Die Verbindungsanordnung gewährleistet bei vergleichsweise einfachem Aufbau eine überaus dichte und funktionssichere Verbindung zwischen der Schraubmuffe und dem Rohrteil aus Metall. Aufgrund des Dichtringes, der in den Kunststoffring der Schraubmuffe eingepreßt ist, wird in zuverlässiger Weise eine Abdichtung gegen den im Rohrteil vorherschenden Innendruck, insbesondere eines Gases, geschaffen. Es ist zu der einen Dichtung, welche durch das in den Kunststoffring eingreifende Rohrgewinde erreicht wird, mittels des Dichtringes eine zusätzliche Abdichtung gegen den Innendruck geschaffen. Der Eingriffsbereich des Kunststoffringes für den genannten Dichtring weist im Vergleich zum Bereich für das Innengewinde einen reduzierten Durchmesser auf, und der derart gestuft ausgebildete Kunststoffring kann problemlos gefertigt werden. Die metallische Einspritzmutter der oben erläuterten bekannten Schraubmuffe kann unverändert beibehalten werden und an den Werkzeugen für die Herstellung der Schraubmuffe sind nur geringfügige Änderungen erforderlich. Aufgrund der zweifachen Dichtung wird eine hohe Sicherheit gewährleistet. Die Einspritzmutter kann auch aus einem nichtmetallischen Werkstoff, insbesondere aus einem glasfaserverstärkten Werkstoff, gefertigt sein. Der zusätzliche Dichtring greift zweckmäßig vollständig in den zugeordneten Dichtbereich des Kunststoffringes ein, wobei die Länge des Dichtbereiches größer ist als die axiale Länge des Dichtringes. Der Dichtring wird beim Herstellen der Verbindung axial entlang einem Teil der Innenfläche des Dichtbereiches gepresst und hierbei wird das elastische Kunststoffmaterial verdrängt. Der Dichtring greift in den Dichtbereich mit Preßsitz ein. Alternativ kann der Dichtring auch mit dem Dichtbereich quasi nur zur Anlage gebracht werden. Bei allen Ausführungsformen besteht der Dichtring aus einem im Vergleich zu dem elastischen Kunststoffmaterial relativ steifen Werkstoff. Der Dichtring wird also in den relativ weichen Kunststoff zumindest teilweise eingepreßt, wodurch ein dichter und funktionssicherer Übergang des metallischen Rohrteiles auf die Muffe aus Kunststoff erreicht wird. Die Kunststoffmuffe kann Bestandteil eines Kunststoffrohres sein oder in geeigneter Weise mit einem solchen Kunststoffrohr verbunden sein.

In einer besonderen Ausgestaltung ist der Dichtring integraler Bestandteil des Rohrteiles. Der Dichtring ist bei dieser Ausführungsform als ein Dichtwulst ausgebildet, der am vorderen Ende des Rohrteiles angeordnet ist. Die Herstellung eines derart integral angeformten Dichtwulstes oder Dichtringes erfordert einen geringen Aufwand.

In einer anderen Ausführungsform ist der Dichtring als separates Bauteil am vorderen Ende des Rohrteiles, insbesondere in einer Ringnut angeordnet. Der Dichtring kann als üblicher U-Ring ausgebildet sein, der in die Ringnut am vorderen Ende des Rohrteiles eingesetzt ist.

In einer besonderen Ausführungsform ist die Innenfläche des dem Dichtring bzw. Dichtwulst zugeordneten Bereiches zylindrisch und/oder glatt ausgebildet, wobei ggfs. vorhandene Durchbrechungen der Einspritzmutter axial beabstandet zu diesem Dichtbereich angeordnet sind. Aufgrund der zylindrischen, glatten Innenfläche des Dichtbereiches wird in Verbindung des ebenfalls ringförmigen Dichtwulstes eine äußerst zuverlässige Abdichtung sichergestellt. Die zylindrische Innenfläche und der Dichtring liegen nach der Montage der Verbindungsanordnung im wesentlichen koaxial zueinander, zumal aufgrund der Gewindeverbindung zwischen Einspritzmutter und Rohrteil eine einwandfreie Zentrierung und koaxiale Ausrichtung gegeben ist. Sofern die Einspritzmutter radiale Durchbrechungen aufweist, liegen diese Durchbrechungen außerhalb des Dichtbereiches. Damit wird zum einen die exakte zylindrische Innenfläche auch ohne besondere Nacharbeiten bei der Fertigung sichergestellt, und zum anderen wird ein Ausweichen des elastischen Kunststoffes im Dichtbereich unterbunden; dies könnte dann eintreten, wenn im Dichtbereich radiale Durchbrechungen vorhanden wären.

In einer wesentlichen Ausgestaltung weist der Rohrteil axial zwischen dem Dichtring und dem Rohrgewinde eine Ringnut auf zur Aufnahme einer elastischen Dichtmasse. Diese Dichtmasse gewährleistet eine weitere Abdichtung, so daß insgesamt drei verschiedene und unabhängig voneinander wirkende Dichtungen gegen den Innendruck vorhanden sind. Der Fertigungsaufwand und auch der Montageaufwand sind gleichwohl äußerst gering. Mittels der elastischen Dichtmasse kann darüberhinaus eine im nachhinein nicht mehr lösbare Verbindung zwischen Schraubmuffe und dem Rohrteil erreicht werden. Erfindungsgemäß weist die elastische Dichtmasse Klebeeigenschaften auf und haftet sowohl fest an dem Rohrteil als auch an der Schraubmuffe. Eine derartige Verbindung ist in optimaler Weise gegen ein nachträgliches Aufschrauben und Undichtwerden der anderen Dichtbereiche zuverlässig gesichert. Die Dichtmasse wird bei der Montage in das Gewinde gedrückt, wodurch die Gewindeflächen von Rohrteil und Einspritzmutter verklebt werden. Eine Verbesserung der Dichtwirkung im Bereich der Gewinde wird erfindungsgemäß erreicht. Als Dichtmasse bzw. Klebemittel werden im Rahmen der Erfindung Cyanakrylate oder vergleichbare Massen vorgesehen. Die erfindungsgemäße Dichtbzw. Klebemasse reagiert mit dem Metall, und es kommt eine Polymerisationsschicht zustande. Aufgrund der Anordnung der Ringnut zwischen dem Wulst bzw. dem vorderen Rohrteilende und dem Rohrgewinde kann bei der Montage das Einbringen der Dichtmasse in einfacher Weise durchgeführt werden. Im eingeschraubten Zustand ist zwischen dem Rohrteil und dem Kunststoffring bzw. dem Dichtbereich ein Ringspalt bzw. eine Ringkammer vorhanden. Dieser verbleibende Ringspalt weist erfindungsgemäß eine radiale Höhe von maximal 1 mm, zweckmäßig bis 0,8 mm und im wesentlichen von 0,4 mm auf. Die Tiefe der Ringnut, also die halbe Durchmesserdifferenz zwischen Dichtwulst und Bodenfläche der Ringnut ist in der Regel größer als die genannte verbleibende Spalthöhe, und zwar aufgrund der elastisch nachgiebigen Eigenschaften des Kunststoffringes. Beim Herstellen der Verbindung wird somit ein Teil der Dichtmasse aus der Ringnut herausgepreßt und gelangt auch in die Gewindeverbindung zwischen dem vorderen, ersten Bereich des Kunststoffringes und dem Gewinde und ergibt dort eine zusätzliche und extrem zuverlässige Abdichtung bzw. Verklebung. Ferner kann erfindungsgemäß durch entsprechende Dimensionierung und Vorgabe der Menge der elastischen Dichtmasse sichergestellt werden, daß darüberhinaus auch das Gewinde der Einspritzmutter mit dem Gewinde des Rohrteiles verklebt wird. Wesentlich ist jedoch vor allem die Reaktion bzw. Polymerisation am Metall der Einspritzmutter in dem Bereich, in welchem das Gewinde der Einspritzmutter in den Kunststoffring eingreift. Der Spalt zwischen dem Boden der Ringnut und der Innenfläche des Kunststoffringes wird entsprechend den Anforderungen und den Eigenschaften der elastischen Dichtmasse vorgegeben.

Um eine zuverlässige Abdichtung gegen von außen einwirkende Medien zu erhalten, weisen die Schraubmuffe sowie der Rohrteil aneinanderliegende Stirnflächen auf, die zweckmäßig beim Einschrauben aneinandergepreßt werden. Insgesamt sind vier verschiedene Dichtbereiche vorhanden.

Die Erfindung wird nachfolgend anhand der in der Zeichnung dargestellten Ausführungsbeispiele näher erläutert. Es zeigen:

Fig. 1 einen axialen Schnitt, wobei gem. Fig. 1A das Rohrteil noch nicht und gem. Fig. 1B das Rohrteil in die Schraubmuffe bereits eingeschraubt ist,

Fig. 2 einen Schnitt durch eine Schraubmuffe, deren Einspritzmutter ein zylindrisches Endstück aufweist,

Fig. 3 eine alternative Ausgestaltung des Rohrteiles mit einem separaten Dichtring,

Fig. 4 teilweise in einem Schnitt und in einer Ansicht eine Doppelmuffe, die an einem Ende eine Heizwendel und am anderen Ende eine Einspritzmutter aufweist.

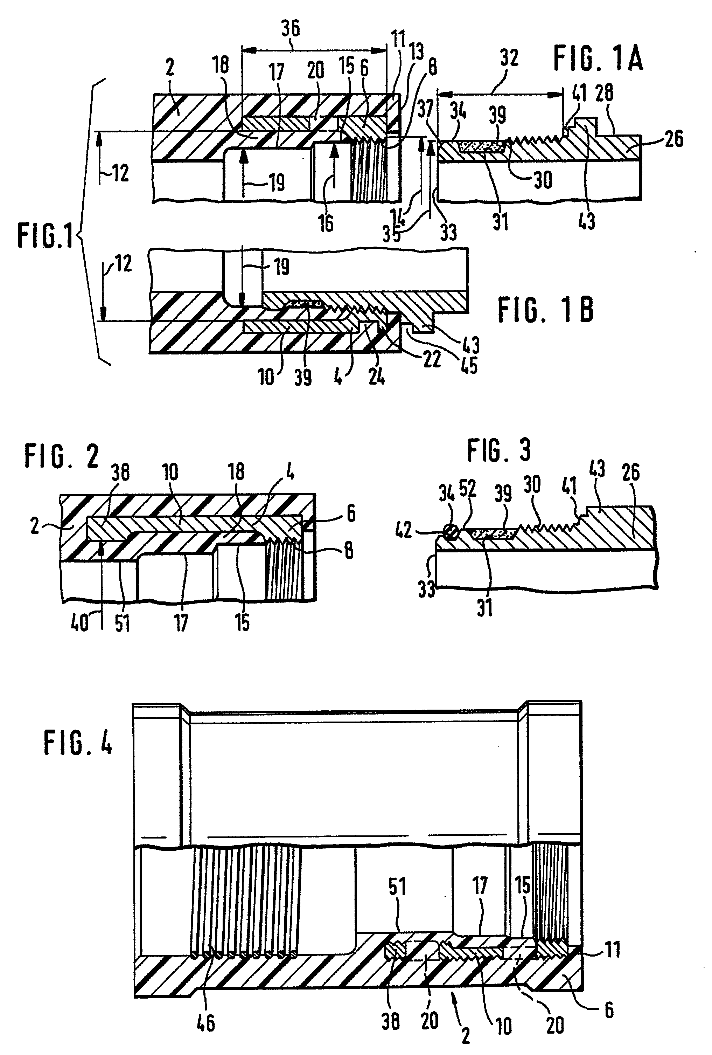

Fig. 1 zeigt eine Schraubmuffe 2 aus Kunststoff, in welcher eine Einspritzmutter 4 aus Metall eingebettet ist. Die Einspritzmutter 4 weist einen vorderen Bereich 6 mit einem Innengewinde 8 auf. Die Einspritzmutter 4 ist mit Ausnahme des Innengewindes 8 vollständig von dem Kunststoff umspritzt, wobei die Kunststoffmuffe 2 vorne noch einen Bund 11 aufweist. An den vorderen Bereich 6 schließt sich ein Mantel 10 der Einspritzmutter 4 an. Der Innendurchmesser 12 des Mantels 10 ist größer als der Außendurchmesser 14 des Innengewindes 8. Innerhalb des Mantels 10 befindet sich ein Kunststoffring 18, der ein integraler Bestandteil der Schraubmuffe 2 ist und beim Umspritzen der Einspritzmutter 4 gebildet wurde. Der Kunststoffring 18 weist einen ersten Bereich 15 mit einem Innendurchmesser 16 und einen zweiten Bereich 17 mit einem Innendurchmesser 19 auf. Aufgrund der gestuften Anordnung der beiden axial aneinanderliegenden Bereiche 15 und 17 wird in Verbindung mit dem Rohrteil 26, das hier als ein Metallfitting ausgebildet ist, eine gute Abdichtung auch bei hohen Innendrücken gewährleistet. Der Innendurchmesser 16 des ersten Bereiches ist kleiner als der Außendurchmesser 14 des Innengewindes. Erfindungsgemäß liegt dieser Innendurchmesser 16 zwischen dem Flankendurchmesser und dem Gewindekerndurchmesser des Innengewindes. Die Einspritzmutter 4 weist ferner radiale Durchbrüche 20 auf, die ebenfalls mit Kunststoff ausgefüllt sind. Diese radiale Durchbrüche 20 bewirken einerseits eine Fixierung sowohl gegen Verdrehung als auch gegen axiale Bewegungen und zum anderen gewährleisten diese beim Spritzen des Kunststoffes eine gleichmäßige Verteilung desselben, daß der Kunststoffring 18 vollständig und ohne Unterbrechungen ausgebildet ist. Zur Fixierung ist auf der Außenfläche der Einspritzmutter ferner eine Rippe 22 bzw. eine Ausnehmung 24 vorgesehen. Den jeweiligen konstruktiven Anforderungen entsprechend werden die Durchbrüche 20, die Rippen 22 und die Ausnehmung 24 vorgegeben.

In Fig. 1A ist der Rohrteil 26 vor der Montage bzw. vor dem Einschrauben in die Schraubmuffe dargestellt. Der Rohrteil 26 kann das Ende eines Metallrohres oder ein Metallfitting oder eine Metallarmatur eines Ventils usw. sein. Der Rohrteil 26 weist auf seiner Außenfläche 28 ein Rohrgewinde 30 auf, welches hier als ein kegeliges Gewinde dargestellt ist. Im Rahmen der Erfindung liegt auch ein zylindrisches Gewinde. Das Rohrgewinde 30 weist eine Länge 32 auf. Die Einspritzmutter 4 bzw. der Mantel 10 sowie der vordere Bereich 6 weisen eine Gesamtlänge 36 auf, die größer ist als die Länge 32 des Rohrteiles 26 und zwar ab Beginn des Rohrgewindes 30. Der Rohrteil 26 weist axial an das Rohrgewinde 30 anschließend eine Ringnut 31 auf, die bis zu einem Dichtring 34 am vorderen Ende 33 reicht. Der Außendurchmesser 35 des Dichtringes 34 ist kleiner als der Zahnspitzendurchmesser des Innengewindes 8 und/oder kleiner als der Innendurchmesser 16 des ersten Bereiches 15. Andererseits ist der Außendurchmesser 35 im Rahmen der Erfindung größer als der Innendurchmesser 19 des zweiten Dichtbereiches 17 vom Kunststoffring 18. Bei dieser Ausführungsform ist der Dichtring 34 integraler Bestandteil des Rohrteiles 26 und besteht mit diesem aus einem einzigen Stück. Der Herstellungsaufwand für den Dichtring bzw. Dichtwulst ist gering. Um das Einführen des Rohrteiles 26 zu erleichtern, weist der Dichtwulst 34 vorn eine Fase 37 auf. Der Neigungswinkel der Fase 37 zur Rohrlängsachse liegt zweckmäßig im Bereich zwischen 20 und 40° und ist bevorzugt etwa 30° groß. In die Ringnut 31 wird vor der Montage eine elastische Dichtmasse 39 eingebracht. Die Schraubmuffe 2 weist an ihrem Bund 11 eine axiale Stirnfläche 13 auf, welcher eine weitere axiale Stirnfläche 41 des Rohrteils 26 zugeordnet ist. Im eingeschraubten Zustand liegen Stirnflächen 13, 14 dichtend aneinander und sind angepreßt. Aufgrund der Aneinanderpressung der beiden Stirnflächen 13, 41 ist eine Dichtung gegen von außen einwirkende Medien geschaffen.

In Fig. 1B ist die Verbindungsanordnung im verschraubten Zustand der Schraubmuffe 2 sowie des Rohrteiles 26 dargestellt. Der Dichtring 34 ist erfindungsgemäß in den Kunststoffring 18, und zwar in den zweiten Bereich 17 mit dem reduzierten Innendurchmesser 19 eingepreßt. Eine erste Dichtung ist damit geschaffen. Die in der Ringnut befindliche elastische Dichtmasse 39 bewirkt eine zweite Dichtung und verklebt den Rohrteil 26 mit der Schraubmuffe 2. Eine dritte Dichtung ist durch das in den Kunststoffring 18 eingreifende und/oder eingeschnittene Rohrgewinde 30 geschaffen. Im Rahmen der Erfindung wid die Wirksamkeit dieser dritten Dichtung durch die Dicht- bzw. Klebemasse, welche aus der Ringnut beim Einschrauben herausgedrückt wird und zu dem Gewinde gelangt, wesentlich verbessert. Im montierten Zustand beträgt der Abstand zwischen dem Boden 31 und der zylindrischen, glatten Innenfläche des Dichtbereiches 17 maximal 1 mm, bevorzugt 0,6 mm und im wesentlichen 0,4 mm. Die erläuterten drei Dichtungen liegen bezüglich des Innendrucks hintereinander und das "Herauskriechen" des insbesondere gasförmigen Mediums von innen nach außen ist mit extrem hoher Zuverlässigkeit unterbunden.

Die aneinanderliegenden Stirnflächen 13 und 41 von Schraubmuffe 2 und dem Rohrteil 26 stellen eine vierte Dichtung dar, die eine Abdichtung gegen das Eindringen von einem Medium von außen her bewirkt. Der Rohrteil 26 weist in der Nähe der Stirnfläche 41 einen Ring 43 auf, der als Sechskant nach Art einer Schraubmutter ausgebildet ist und an welchem ein herkömmlicher Schraubschlüssel zum Einschrauben des Rohrteiles 26 angreifen kann. Anstelle eines Sechskantes können auch andere Mittel vorgesehen werden, die mit Werkzeugen das Verschrauben von Rohrteil 26 und Schraubmuffe 2 ermöglichen. Zwischen dem Bund 11 und dem Ring 43 befindet sich im eingeschraubten Zustand noch ein Spalt 45. Dieser ringförmige Spalt 45 dient als optische Kontrolle, um die Einschraubtiefe des Rohrteiles 26 in die Schraubmuffe 2 zu überprüfen. Im Rahmen der Erfindung kann der Ring 43 auch derart ausgebildet sein, daß beim Einschrauben des Rohrteiles 26 der Spalt 45 vollständig verschwindet und somit die Schraubmuffe 2 mit ihrer axialen Stirnfläche 13 insgesamt an dem Ring 43 anliegt. Die Schraubmuffe 2 weist ferner am anderen Ende, und zwar gem. Fig. 1 links, eine hier nicht dargestellte Heizwendel auf, um in hinlänglich bekannter Weise ein Kunststoffrohr aus einem schweißbaren Werkstoff anzuschweißen. Der Rohrteil 26 kann im Rahmen der Erfindung an seinem anderen Ende 49 eine geeignete Anschlußmöglichkeit für ein Metallrohr o.ä. aufweisen. Ferner kann erfindungsgemäß der Rohrteil 26 Bestandteil einer Armatur, eines Ventils oder dergleichen sein. Genannt seien hier insbesondere ein Außen- oder Innengewinde, ein Kugeloder auch ein Bajonettanschluß. Bei allen Ausführungsformen wird aufgrund der erfindungsgemäßen Ausgestaltung eine insgesamt vierfache Abdichtung zwischen dem Rohrteil 26 und der Schraubmuffe 2 geschaffen.

Fig. 2 zeigt eine Ausführungsform, bei welcher die Einspritzmutter 4 noch zusätzlich ein zylindrisches Endstück 38 aufweist. In axialer Richtung zwischen dem Endstück 38 und dem vorderen Bereich 6 befindet sich der Kunststoffring 18. Das zylindrische Endstück weist einen Innendurchmesser 40 auf, der etwa dem Kerndurchmesser des Innengewindes 8 entspricht. Bei Einpressen des Wulstes unterbindet das zylindrische Endstück 38 zuverlässig ein Ausweichen des Kunststoffes, wodurch eine besonders hohe Funktionssicherheit gewährleistet wird. Im Rahmen der Erfindung liegt bei eingeschraubtem Rohrteil 26 der Wulst in dem zweiten Bereich 17. Die Schraubmuffe 2 weist einen weiteren Bereich 51 auf, dessen Innendurchmesser noch kleiner ist als der des zweiten Bereiches 17. Die Schraubmuffe 2 bzw. der Kunststoffring weist somit insgesamt drei gestufte Bereiche mit unterschiedlichen Innendurchmessern auf.

Fig. 3 zeigt eine Ausführungsform, bei welcher ein separater Dichtring 34 am vorderen Ende 33 des Rohrteiles 26 angeordnet ist. Der Dichtring 34 kann als ein O-Ring ausgebildet sein. Zwischen dem Dichtring 34 und der oben erläuterten Ringnut 31 befindet sich eine Ringschulter 52, an welcher der Dichtring 34 abgestützt ist. Gegebenenfalls kann im Rahmen dieser Erfindung der Dichtring 34 in einer Ringnut 42 am vorderen Ende 33 des Rohrteiles 26 angeordnet sein, um vor dem Zusammenschrauben ein unbeabsichtigtes Herauslösen zu unterbinden. Der Rohrteil 26 ist Bestandteil eines hier nicht weiter dargestellten Ventiles, einer Anbohrarmatur oder dergleichen, die in hier nicht weiter zu erläuternder Weise am rechten Rand anschließend vorgesehen sind.

In Fig. 4 ist eine Doppelmuffe dargestellt, welche die erfindungsgemäße Schraubmuffe 2 enthält. In der Zeichnung links ist eine Heizwendel 46 zu sehen, um hier ein Kunststoffrohr nach dem Heizwendelschweißen anzuschließen. Mit einer derartigen erfindungsgemäß ausgebildeten Doppelmuffe kann ein Kunststoffrohr zuverlässig auch bei hohen Anforderungen hinsichtlich Dichtheit mit einem Metallrohr verbunden werden. Die drei abgestuften Bereiche, die dem Mantel 10 sowie dem zylindrischen Endstück 38 zugeordnet sind, sind klar zu erkennen. Die Schraubmuffe 2 umgreift vorn mit dem Bund 11 die Einspritzmutter, von welcher das Innengewinde 8 sichtbar und frei zugänglich ist. Im übrigen ist die Einspritzmutter vollständig in den Kunststoff der Schraubmuffe 2 eingebettet, wobei auch die radialen Durchbrüche 20 zum Zwecke der Verankerung vom Kunststoff ausgefüllt sind.

**Patentansprüche**

1. Verbindungsanordnung mit einer Schraubmuffe (2) aus Kunststoff, vorzugsweise aus Polyolefin, wie z.B. Polyäthylen, und mit einem ein Rohrgewinde (30) aufweisenden Rohrteil (26), insbesondere eines Metallrohres oder Metallfittings, wobei die Schraubmuffe (2) eine Einspritzmutter (4) mit Innengewinde (8) und ferner einen inneren Kunststoffring (18) mit einem Bereich (15) aufweist, welcher einen Innendurchmesser (16) kleiner als der Außendurchmesser (14) des genannten Innengewindes (8) aufweist und in welchen das Rohrgewinde (30) des Rohrteiles (26) eingreift, und ferner mit einem Mantel (10), der mit der Einspritzmutter (4) verbunden ist, dessen Durchmesser (12) größer als der Außendurchmesser (14) des Innengewindes (8) ist und der sich zumindest über den Bereich (15) des Kunststoffringes (18), in welchen das Rohrgewinde des Rohrteiles eingreift, erstreckt, dadurch gekennzeichnet, daß der Rohrteil (26) am freien Ende (33) einen zusätzlichen Dichtring (34) aufweist, dessen Außendurchmesser (35) kleiner ist als der Zahnspitzendurchmesser des Innengewindes (8) der Einspritzmutter (4), daß der Kunststoffring (18) der Schraubmuffe (2) von deren Stirnfläche (13) beabstandet einen Dichtbereich (17) aufweist, mit welchem der Dichtring (34) zusammenwirkt und dessen Innendurchmesser (19) kleiner ist als der Außendurchmesser (35) des Dichtringes (4), und daß der in das Rohrgewinde (30) eingreifende Bereich (15) des Kunststoffringes (18) zwischen dem Innengewinde (8) und dem Dichtbereich (17) liegt und einen Durchmesser (16) aufweist, der größer als der Durchmesser (19) des Dichtbereiches (17) ist.

2. Verbindunganordnung nach Anspruch 1, dadurch gekennzeichnet, daß der Dichtring (34) als ein Dichtwulst ausgebildet und integraler Bestandteil des Rohrteiles (26) ist.

3. Verbindungsanordnung nach Anspruch 1, dadurch gekennzeichnet, daß der Dichtring (34) als separater Bauteil in einer Ringnut (42) des Rohrteiles (26) angeordnet ist.

4. Verbindungsanordnung nach einem der Ansprüche 1 bis 3, dadurch gekennzeichnet, daß die Innenfläche des Dichtbereiches (17) zylindrisch und/oder glatt ausgebildet ist.

5. Verbindungsanordnung nach einem der Ansprüche 1 bis 4, dadurch gekennzeichnet, daß der Rohrteil (26), bevorzugt zwischen dem Dichtring (34) und dem Rohrgewinde (30), eine Ringnut (31) zur Aufnahme einer elastischen Dichtmasse (39) aufweist.

6. Verbindungsanordnung nach Anspruch 5, dadurch gekennzeichnet, daß zwischen dem Boden der Ringnut (31) und der Innenfläche des Kunststoffringes (18), und zwar bevorzugt im Dichtbereich (17), ein mit der elastischen Dichtmasse (39) ausgefüllter Ringspalt vorhanden ist.

7. Verbindungsanordnung nach einem der Ansprüche 1 bis 6, dadurch gekennzeichnet, daß der Ringspalt eine radiale Höhe von maximal 1 mm, bevorzugt 0,6 mm, und im wesentlichen von 0,4 mm aufweist.

8. Verbindungsanordnung nach einem der Ansprüche 1 bis 7, dadurch gekennzeichnet, daß der Dichtring (34) mit dem Aussendurchmesser (35) bei eingeschraubtem Rohrteil (26) innerhalb der Einspritzmutter (4) und/oder axial beabstandet zu Durchbrechungen (20) angeordnet ist.

9. Verbindungsanordnung nach einem der Ansprüche 1 bis 8, dadurch gekennzeichnet, daß die Schraubmuffe (2) mit einer Stirnfläche (13) an einer Stirnfläche (41) des Rohrteiles (26) dichtend anliegt und/oder angepreßt ist.

10. Verbindungsanordnung nach einem der Ansprüche 1 bis 9, dadurch gekennzeichnet, daß die Einspritzmutter (4) ein zylindrisches Endstück (38) mit einem verringerten Durchmesser (40) aufweist und daß der Kunststoffring (18) mit seinem zweiten Bereich (17) für den Dichtring (34) axial zwischen dem Innengewinde (8) und dem Endstück (38) angeordnet ist.

## Claims

1. Connecting arrangement with a screw sleeve (2) of plastics, preferably a polyolefin such as polyethylene, with a tube part (26) having a tubular thread (30), and particularly of a metal pipe or metal fitting, the screw sleeve (2) having an injection nut (4) with an internal thread (8) and also an inner plastics ring (18) with a region (15) which has an internal diameter (16) less than the outer diameter (14) of said internal thread (8) and in which the tubular thread (30) of the tube part (26) engages, and also with a shell (10) which is connected to the injection nut (4), has a diameter (12) greater than the outer diameter (14) of the internal thread (8) and extends at least over the region (15) of the plastics ring (18) in which the tubular thread of the tube part engages, characterised in that the tube part (26) has, at its free end (33), an additional sealing ring (34) the external diameter (35) of which is smaller than the diameter of the crest of the teeth of the internal thread (8) of the injection nut (4), that the plastics ring (18) of the screw sleeve (2) has, at a spacing from the end face (13) of said sleeve, a sealing region (17) with which the sealing ring (34) cooperates and the internal diameter (19) of which is smaller than the external diameter (35) of the sealing ring (4), and that the region (15) of the plastics ring (18) which engages in the tubular thread (30) is situated between the internal thread (8) and the sealing region (17) and has a diameter (16) larger than the diameter (19) of the sealing region (17).

2. Connecting arrangement according to claim 1, characterised in that the sealing ring (34) is constructed as a sealing bead and is an integral part of the tube part (26).

3. Connecting arrangement according to claim 1, characterised in that the sealing ring (34) is arranged as a separate component in an annular groove (42) of the tube part (26).

4. Connecting arrangement according to one of claims 1 to 3, characterised in that the inner surface of the sealing region (17) is of cylindrical and/or smooth configuration.

5. Connecting arrangement according to one of claims 1 to 4, characterised in that the tube part (26) comprises, preferably between the sealing ring (34) and the tubular thread (30), an annular groove (31) for receiving a resilient sealing composition (39).

6. Connectiong arrangement according to claim 5, characterised in that between the base of the annular groove (31) and the inner surface of the plastics ring (18), preferably in the sealing region (17), there is an annular slot filled with the resilient sealing composition (39).

7. Connecting arrangement according to one of claims 1 to 6, characterised in that the annular slot has a radial height of not more than 1mm, preferably 0.6mm, and particularly 0.4mm.

8. Connecting arrangement according to one of claims 1 to 7, characterised in that with the tube section (26) screwed in the sealing ring (34) is arranged with the external diameter (35) inside the injection nut (4) and/or at an axial spacing from openings (20).

9. Connecting arrangement according to one of claims 1 to 8, characterised in that the screw sleeve (2) closely abuts and/or is pressed, with an end face (13) against an end face (41) of the tube section (26).

10. Connecting arrangement according to one of claims 1 to 9, characterised in that the injection nut (4) has a cylindrical end piece (38) with a reduced diameter (40) and the plastics ring (18) is arranged with its second region (17) for the sealing ring (34) axially between the internal thread (8) and the end piece (38).

## Revendications

1. Dispositif de raccordement comprenant d'une part, un manchon fileté (2) en matière plastique de préférence en polyoléfine comme, par exemple en polyéthylène et, d'autre part, une partie tube (26) présentant un filetage de tube (30) et, en particulier, un tube métallique ou un raccord ou appareil de robinetterie métallique, le manchon fileté (2) présentant a) un écrou prisonnier (4) qui possède un filetage intérieur (8) et, en outre, b) un anneau de matière plastique intérieur (18) possédant une région (15) qui présente un diamètre intérieur (16) plus petit que le diamètre extérieur (14) du filetage intérieur (8) précité, et dans lequel le filetage de tube (30) de la partie tube (26) se visse, et en outre, c) une jupe (10) qui est solidaire de l'écrou prisonnier (4), dont le diamètre (12) est plus grand que le diamètre extérieur (14) du filetage intérieur (8), et qui s'étend au moins sur la région (15) de l'anneau de matière plastique (18) dans laquelle mord le filetage de tube de la partie tube, caractérisé en ce que la partie tube (26) présente à son extrémité libre (33) une bague d'étanchéité additionnelle (34) dont le diamètre extérieur (35) est plus petit que la diamètre de sommet de filets du filetage intérieur (8) de l'écrou prisonnier (4), en ce que l'anneau de matière plastique (18) du manchon fileté (2) présente, à une certaine distance de sa paroi frontale (13), une région d'étanchéité (17) avec laquelle coopère la bague d'étanchéité (34) et dont le diamètre intérieur (19) est plus petit que le diamètre extérieur (35) de la bague d'étanchéité (4), et en ce que la région (15) de l'anneau de matière plastique (18) qui prend sur le filetage de tube (30) se trouve entre le filetage intérieur (8) et la région d'étanchéité (17), et présente un diamètre (16) qui est plus grand que le diamètre (19) de la région d'étanchéité (17).

2. Dispositif de raccordement selon la revendication 1, caractérisé en ce que la bague d'étanchéité (34) est constituée par un bourrelet d'étanchéité et fait partie intégrante de la partie tube (26).

3. Dispositif de raccordement selon la revendication 1, caractérisé en ce que la bague d'étanchéité (34) est un composant distinct et est disposée dans une gorge annulaire (42) de la partie tube (26).

4. Dispositif de raccordement selon une des revendications 1 à 3, caractérisé en ce que la surface interne de la région d'étanchéité (17) est de configuration cylindrique et/ou lisse.

5. Dispositif de raccordement selon l'une des revendications 1 à 4, caractérisé en ce que la partie tube (26) présente, de préférence entre la bague d'étanchéité (34) et le filetage de tube (30), une gorge annulaire (31) destinée à contenir un agent d'étanchéité élastique (39).

6. Dispositif de raccordement selon la revendication 5, caractérisé en ce qu'une fente annulaire remplie de l'agent d'étanchéité élastique (39) est présente entre le fond de la gorge annulaire (31) et la surface interne de l'anneau de matière plastique (18), de préférence dans la région d'étanchéité (17).

7. Dispositif de raccordement selon l'une des revendications 1 à 6, caractérisé en ce que la fente annulaire présente une hauteur radiale de 1 mm au maximum, de préférence égale à 0,6 mm et, essentiellement de 0,4 mm.

8. Dispositif de raccordement selon l'une des revendications 1 à 7, caractérisé en ce que la bague d'étanchéité (34) qui présente le diamètre extérieur (35) est disposée à l'intérieur de l'écrou prisonnier (4) et/ou à une certaine distance axiale des trous (20) lorsque la partie tube (26) est vissée.

9. Dispositif de raccordement selon l'une des revendications 1 à 8, caractérisé en ce que le manchon fileté (12) est appuyé et/ou comprimé à joint étanche, par une surface frontale (13) contre une surface frontale (41) de la partie tube (26).

10. Dispositif de raccordement selon l'une des revendications 1 à 9, caractérisé en ce que l'écrou prisonnier (4) présente une partie d'extrémité cylindrique (38) de daimètre réduit (40) et en ce que l'anneau de matière plastique (18) présente sa deuxième région (17) destinée à recevoir la bague d'étanchéité (34) entre le filetage intérieur (8) et la partie d'extrémité (38), considéré dans la direction axiale.

FIG.1A

FIG.1

FIG. 1B

FIG. 2

FIG. 3

FIG. 4